(19)

**Europäisches Patentamt**
**European Patent Office**
**Office européen des brevets**

(11) **EP 4 550 267 B1**

(12) **EUROPEAN PATENT SPECIFICATION**

(45) Date of publication and mention
of the grant of the patent:
**13.05.2026 Bulletin 2026/20**

(21) Application number: **24208533.0**

(22) Date of filing: **24.10.2024**

(51) International Patent Classification (IPC):
**G06T 7/593** *(2017.01)*

(52) Cooperative Patent Classification (CPC):
**G06T 7/593;** G06T 2207/20088; G06T 2207/30196

(54) **SYSTEM, DEVICE, METHOD, AND COMPUTER PROGRAM PRODUCT FOR POSITION ESTIMATION**

SYSTEM, VORRICHTUNG, VERFAHREN UND COMPUTERPROGRAMMPRODUKT ZUR POSITIONSSCHÄTZUNG

SYSTÈME, DISPOSITIF, PROCÉDÉ ET PRODUIT PROGRAMME D'ORDINATEUR POUR ESTIMATION DE POSITION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.10.2023 JP 2023186822**

(43) Date of publication of application:
**07.05.2025 Bulletin 2025/19**

(73) Proprietor: **GLORY LTD.**
**Himeji-shi**
**Hyogo 670-8567 (JP)**

(72) Inventors:
• **KAWATA, Kozo**
**Hyogo, 670-8567 (JP)**
• **YASAKI, Masatomo**
**Hyogo, 670-8567 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**CN-A- 116 758 267       US-A1- 2017 076 454**
**US-A1- 2022 067 390      US-A1- 2022 262 069**
**US-B2- 11 501 462**

• **SHIGANG LI: "Real-Time Spherical Stereo", 18TH INTERNATIONAL CONFERENCE ON PATTERN RECOGNITION (ICPR'06), vol. 3, 20 August 2006 (2006-08-20), US, pages 1046 - 1049, XP055361794, ISSN: 1051-4651, DOI: 10.1109/ ICPR.2006.968**

**Description**

BATECHNICAL FIELD

The present disclosure relates to a system, a device, a method, and a computer program product for estimating the position of an object in a three-dimensional space.

BACKGROUND ART

Conventionally, in an unmanned store selling commodities, it is important to identify which customer takes which commodity. Thus, a technology that automatically identifies the commodity a customer is purchasing and achieves an automated checkout, simply by having the customer take the commodity from a showcase and proceed to a checkout counter during shopping in a store, has been known.

For example, Japanese Patent No. 7225434 discloses an information processing system that causes a plurality of cameras (range sensors) provided in a store to track a customer, acquires position information on the customer, detects a taken out commodity with a weight sensor provided in a showcase, and manages the customer and the commodity in association with each other, whereby the commodity the customer is purchasing is identified and an automated checkout is achieved without an attendant or the like.

US 11 501 462 B2 relates to image processing for three-dimensional object recognition and positioning based on image data representing multiple views of a scene.

Shigang Li, ICPR'06, vol.3, pages 1046-1049 relate to acquiring dense three-dimensional information of environment by correlation-based real-time spherical stereo.

US 2022/262069 A1 discloses systems and techniques for calibrating cameras in a real space for tracking puts and takes of items by subjects.

SUMMARY

However, according to the conventional art, it is difficult to accurately acquire the position information on the customer with the plurality of cameras (range sensors). Specifically, if the positions of an object captured by the respective cameras are shifted, more processing time is needed to determine whether or not such positions correspond to the same object.

The present disclosure has been made in view of the problem of the conventional art. The present disclosure addresses the problem, as discussed herein, with a system, a device, a method, and a computer program product for efficiently estimating the position of an object in a three-dimensional space.

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

The objects, features, advantages, and technical and industrial significance of this disclosure will be better understood by the following description and the accompanying drawings of the disclosure.

BRIEF DESCRIPTION OF THE DRAWINGS

FIG. 1 is a diagram showing an outline of a position estimation system according to embodiment 1 of the present disclosure;
FIG. 2 is a diagram showing an outline of position estimation by the position estimation system according to embodiment 1;
FIG. 3 is a diagram showing the system configuration of the position estimation system shown in FIG. 1;
FIG. 4 is a functional block diagram showing the configuration of the position estimation device shown in FIG. 1;
FIG. 5 is a diagram showing an outline of a procedure for coordinate transformation;
FIG. 6 illustrates the coordinate transformation;
FIG. 7 illustrates a condition satisfying the epipolar constraint;
FIGS. 8A to 8C illustrate calculation of $\alpha$ and $\beta$;
FIG. 9 illustrates a case not satisfying the epipolar constraint;
FIG. 10 illustrates calculation of an intersection of vectors;
FIG. 11 is a flowchart showing a processing procedure of the position estimation device shown in FIG. 1;

FIG. 12 is a diagram showing an outline of a position estimation system according to embodiment 2 of the present disclosure;

FIG. 13 is a diagram showing the system configuration of the position estimation system shown in FIG. 12;

FIG. 14 is a functional block diagram showing the configuration of a position estimation device shown in FIG. 12;

FIGS. 15A and 15B illustrate distances from an article to joint points;

FIG. 16 is a diagram showing one example of a probability density function used as the likelihood;

FIG. 17 is a flowchart showing a processing procedure of the position estimation device shown in FIG. 12;

FIG. 18 is a flowchart showing a processing procedure of a joint position identification process;

FIG. 19 is a flowchart showing a processing procedure of a likelihood calculation process; and

FIG. 20 is a diagram showing one example of a configuration.

DESCRIPTION OF EMBODIMENTS

Hereinafter, a position estimation system, a position estimation device, a position estimation method, and a computer program product for position estimation according to embodiments of the present disclosure will be described in detail with reference to the drawings.

[Embodiment 1]

<Outline of position estimation system 10>

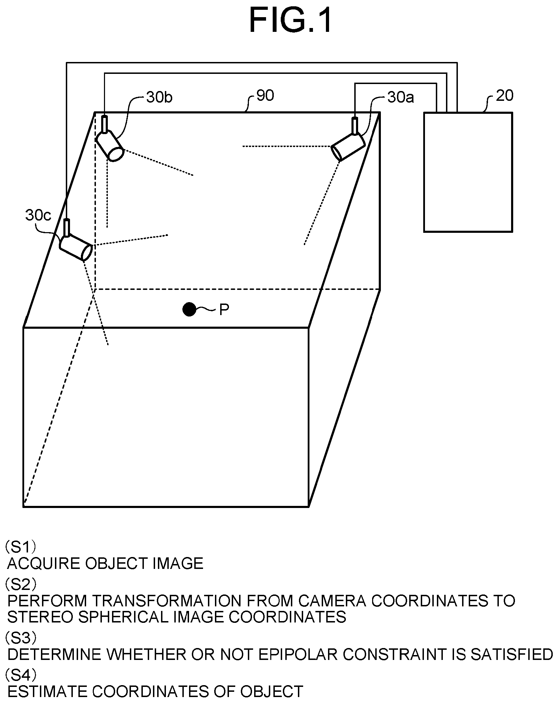

An outline of a position estimation system 10 according to embodiment 1 will be described. FIG. 1 is a diagram showing the outline of the position estimation system 10 according to embodiment 1. As shown in FIG. 1, the position estimation system 10 includes a position estimation device 20 and three imaging devices 30a, 30b, 30c (hereinafter, sometimes collectively referred to as "imaging devices 30"). Each imaging device 30 is a camera including an optical system and a sensor such as a charge coupled device (CCD). The three imaging devices 30 are arranged on the ceiling of a room 90 such that imaging positions of the imaging devices 30 form a triangle.

The position estimation device 20 acquires images of an object from the imaging devices 30 (S1), and transforms image data, acquired by each imaging device, from camera coordinates to stereo spherical image coordinates (S2). Then, the position estimation device 20 determines whether or not predetermined coordinate points of the imaged object satisfy the epipolar constraint (S3). Then, if the predetermined coordinate points satisfy the epipolar constraint, the position estimation device 20 estimates that the coordinate points correspond to the coordinates of the object (S4).

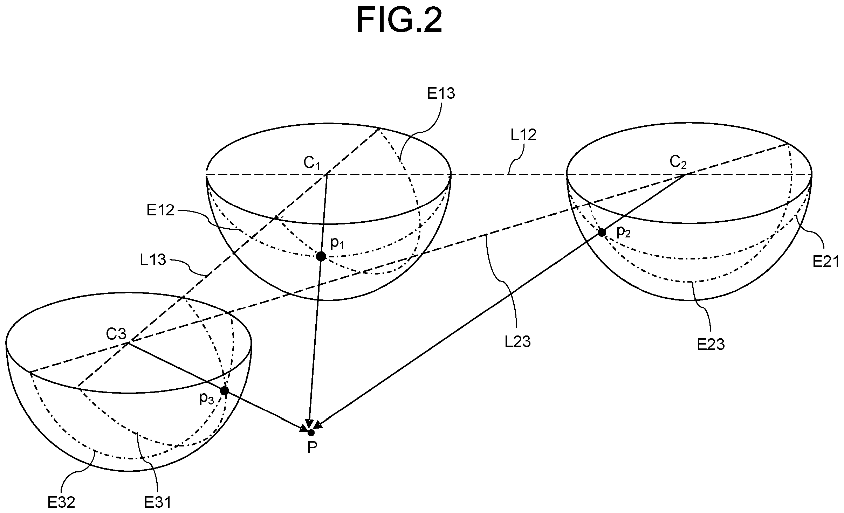

Here, a case where the predetermined coordinate points satisfy the epipolar constraint will be described. As shown in FIG. 2, the position estimation device 20 transforms an image captured by the first imaging device 30a to spherical image coordinates using C1 as the origin. Similarly, images captured by the second imaging device 30b and the third imaging device 30c are also transformed to spherical image coordinates using C2 and C3 as the origins, respectively.

To perform determination regarding the epipolar constraint for the predetermined coordinate points, stereo spherical image coordinates are constructed by using the spherical image coordinates of two of the three imaging devices 30. That is, the position estimation system using the three imaging devices 30 provides three pairs of stereo spherical image coordinates as follows: first stereo spherical image coordinates calculated based on the spherical image coordinates of the first imaging device 30a and the second imaging device 30b; second stereo spherical image coordinates calculated based on the spherical image coordinates of the second imaging device 30b and the third imaging device 30c; and third stereo spherical image coordinates calculated based on the spherical image coordinates of the first imaging device 30a and the third imaging device 30c.

P shown in FIG. 2 represents one point in a three-dimensional space. Assuming that a line connecting the origin C1 of the first spherical image coordinates and the origin C2 of the second spherical coordinates is a baseline L12, p1 and p2 respectively lie on great circles corresponding to epipolar lines E12 and E21 for the first imaging device 30a and the second imaging device 30b, and lie on a plane PC1C2. Assuming that a line connecting the origin C2 of the second spherical image coordinates and the origin C3 of the third spherical coordinates is a baseline L23, p2 and p3 respectively lie on great circles corresponding to epipolar lines E23 and E32 for the second imaging device 30b and the third imaging device 30c, and lie on a plane PC2C3. Assuming that a line connecting the origin C1 of the first spherical image coordinates and the origin C3 of the third spherical coordinates is a baseline L13, p1 and p3 respectively lie on great circles corresponding to epipolar lines E13 and E31 for the first imaging device 30a and the third imaging device 30c, and lie on a plane PC1C3. That is, three epipolar constraints hold, and p1, p2, and p3 indicate one point (position of object P) in the three-dimensional space.

As described above, the position estimation system 10 includes the position estimation device 20 and the three imaging devices 30. The three imaging devices 30 are arranged such that the imaging positions of the imaging devices 30 form a triangle. The position estimation device 20 acquires images from the three imaging devices 30, performs transformation from image coordinates to stereo spherical image coordinates, then determines whether or not the epipolar constraint is satisfied in each pair of the stereo spherical image coordinates, and identifies the position of the object P if the epipolar constraint is satisfied.

<Configuration of position estimation system 10>

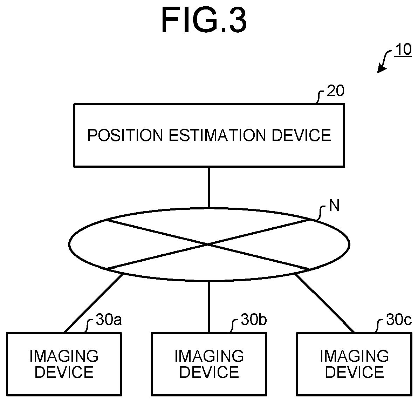

The system configuration of the position estimation system 10 shown in FIG. 1 will be described. FIG. 3 is a diagram showing the system configuration of the position estimation system 10 shown in FIG. 1. As shown in FIG. 3, the position estimation system 10 includes the position estimation device 20 and the imaging devices 30a, 30b, 30c which are connected via a network N.

The position estimation device 20 performs a process of acquiring images from the imaging devices 30, a process of transforming the image coordinates of the acquired images to stereo spherical image coordinates, a process of determining whether or not the epipolar constraint is satisfied in the stereo spherical image coordinates, a process of estimating the position of the object, etc. Each imaging device 30 is a BOX camera having a predetermined angle of view, and performs a process of capturing images of the object in a three-dimensional space.

<Configuration of position estimation device 20>

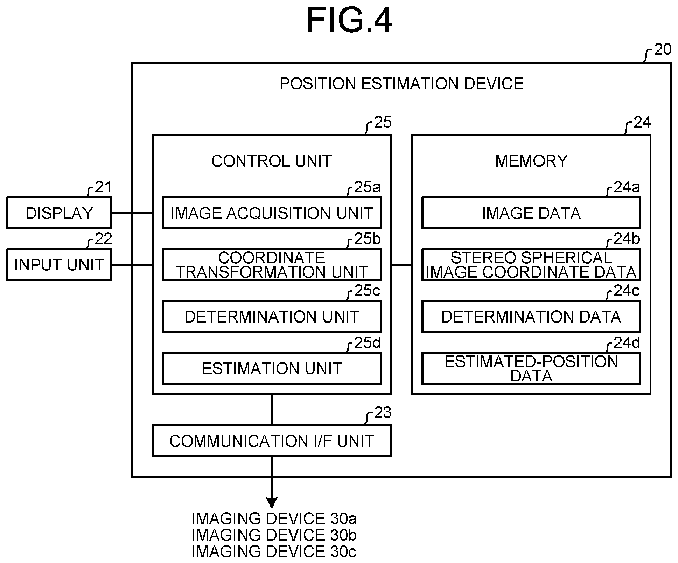

The configuration of the position estimation device 20 shown in FIG. 1 will be described. FIG. 4 is a functional block diagram showing the configuration of the position estimation device 20 shown in FIG. 1. As shown in FIG. 4, the position estimation device 20 includes a display 21, an input unit 22, a communication I/F unit 23, a memory 24, and a control unit 25. The display 21 is a display device such as a liquid crystal display for displaying various information. The input unit 22 is composed of input devices such as a mouse and a keyboard. The communication I/F unit 23 is a communication interface for communicating with the imaging devices 30a, 30b, 30c via the network N.

The memory 24 is a memory device such as a hard disk device or a non-volatile memory, and stores therein image data 24a, stereo spherical image coordinate data 24b, determination data 24c, and estimated-position data 24d. The image data 24a refers to data of images acquired from the three imaging devices 30. The stereo spherical image coordinate data 24b refers to data of stereo spherical image coordinates generated using two of the three imaging devices 30. The stereo spherical image coordinate data 24b is stored as one set of data including: data generated using the first imaging device 30a and the second imaging device 30b; data generated using the second imaging device 30b and the third imaging device 30c; and data generated using the first imaging device 30a and the third imaging device 30c.

The determination data 24c refers to data of the determination result regarding whether or not the epipolar constraint is satisfied, determined based on the stereo spherical image coordinate data 24b. The estimated-position data 24d refers to data in which coordinate points, with respect to the position of the object imaged by the three imaging devices 30, which are determined to satisfy the epipolar constraint are estimated to correspond to the position of an object.

The control unit 25 is a controller for controlling the entire position estimation device 20, and includes an image acquisition unit 25a, a coordinate transformation unit 25b, a determination unit 25c, and an estimation unit 25d. Specifically, programs corresponding to these units are loaded in a CPU and executed, whereby processes respectively corresponding to the image acquisition unit 25a, the coordinate transformation unit 25b, the determination unit 25c, and the estimation unit 25d are executed.

The image acquisition unit 25a is a processing unit that acquires images of the object from the imaging devices 30. Specifically, the image acquisition unit 25a stores data of images transmitted from the imaging devices 30a, 30b, 30c as the image data 24a.

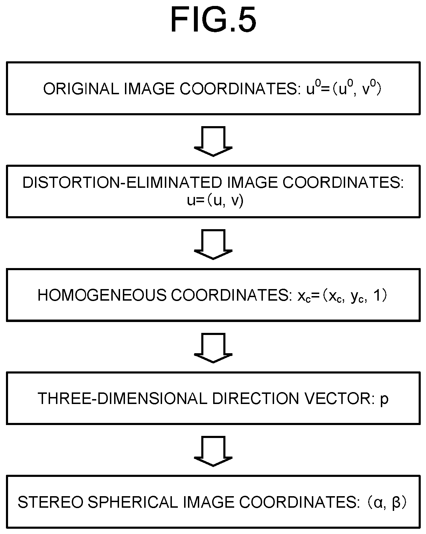

The coordinate transformation unit 25b is a processing unit that reads the image data 24a from the memory 24 and transforms the image coordinates captured by the imaging devices 30 to stereo spherical image coordinates. Specifically, as shown in FIG. 5, the coordinate transformation unit 25b reads out original image coordinates from the memory 24, and eliminates optical distortion due to the image devices therefrom. Then, the coordinate transformation unit 25b transforms the distortion-eliminated image coordinates to homogeneous coordinates, and calculates three-dimensional vectors. Thereafter, the coordinate transformation unit 25b transforms the image coordinates to stereo spherical image coordinates, and stores the same in the memory 24 as the stereo spherical image coordinate data 24b.

The determination unit 25c performs a process of determining whether or not predetermined coordinate points satisfy the epipolar constraint, based on the stereo spherical image coordinate data 24b. Specifically, the determination unit 25c performs determination regarding whether or not the epipolar constraint is satisfied in all the stereo spherical image coordinates, which are the first stereo spherical image coordinates calculated based on image data acquired from the first imaging device 30a and the second imaging device 30b, the second stereo spherical image coordinates calculated based on image data acquired from the second imaging device 30b and the third imaging device 30c, and the third stereo spherical image coordinates calculated based on image data acquired from the first imaging device 30a and the third imaging device 30c.

The determination unit 25c determines that it is "OK" if the epipolar constraint is satisfied in the three pairs of the stereo spherical image coordinates, and that it is "No Good" if the epipolar constraint is not satisfied in at least one pair of the three stereo spherical image coordinates. The estimation unit 25d is a processing unit that estimates that the predetermined coordinate points correspond to the position of an article if the determination unit 25c determines that it is "OK".

<Transformation of image coordinates>

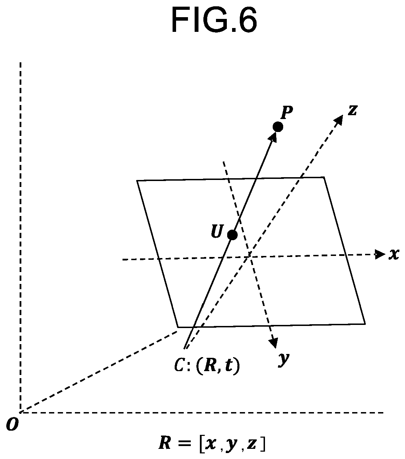

Transformation of image coordinates by the position estimation device 20 will be described. FIG. 6 illustrates coordinate transformation. Here, it is assumed that distortion components of a camera have been corrected. As shown in FIG. 6, assuming that the origin of a camera coordinate system is C, the origin of a world coordinate system is O, a camera rotation vector is R, and a translation vector is t, transforming the world coordinates of a point P to camera coordinates Xcamera with respect to the point P can be expressed by Xcamera=R$^T$ (P-t).

A point U in an image coordinate system can be expressed by equation (1) using a camera matrix K and the camera coordinates Xcamera.

[Math. 1]

$$s \begin{bmatrix} u \\ v \\ 1 \end{bmatrix} = \begin{bmatrix} f_x & 0 & o_x \\ 0 & f_y & o_y \\ 0 & 0 & 1 \end{bmatrix} \begin{bmatrix} X_c \\ Y_c \\ Z_c \end{bmatrix} \tag{1}$$

$$\overset{U}{\phantom{x}} \qquad \overset{K}{\phantom{x}} \qquad \overset{X_{camera}}{\phantom{x}}$$

Here, equation (1) is expressed by equation (2) by normalizing the vectors of Xcamera with Zc.

[Math. 2]

$$\begin{bmatrix} u \\ v \\ 1 \end{bmatrix} = \begin{bmatrix} f_x & 0 & o_x \\ 0 & f_y & o_y \\ 0 & 0 & 1 \end{bmatrix} \begin{bmatrix} x_c \\ y_c \\ 1 \end{bmatrix} \tag{2}$$

$$\overset{U}{\phantom{x}} \qquad \overset{K}{\phantom{x}} \qquad \overset{X_{camera}}{\phantom{x}}$$

Here, xc=Xc/Zc and yc=Yc/Zc hold. According to equation (2), u and v can be given by u=fxxc+ox and v=fyyc+oy. Accordingly, xc and yc can be given by xc=(u-ox)/fx and yc=(v-oy)/fy.

On the other hand, a three-dimensional direction vector p can be expressed by equation (3). N[*] represents normalization of a vector with norm 1.

[Math. 3]

$$p = N[P - t] = N[RX_{camera}] = RN[X_{camera}] \tag{3}$$

Thus, if the camera matrix K and the camera rotation vector R are known, the three-dimensional direction vector p can be calculated from the image coordinates U.

<Case where epipolar constraint is satisfied>

A condition satisfying the epipolar constraint will be described. Here, a case using the camera coordinates of the first imaging device 30a and the camera coordinates of the second imaging device 30b will be described. The same process is performed for transformation to stereo spherical coordinates using the camera coordinates of the second imaging device 30b and the camera coordinates of the third imaging device 30c and transformation to stereo spherical coordinates using the camera coordinates of the first imaging device 30a and the camera coordinates of the third imaging device 30c.

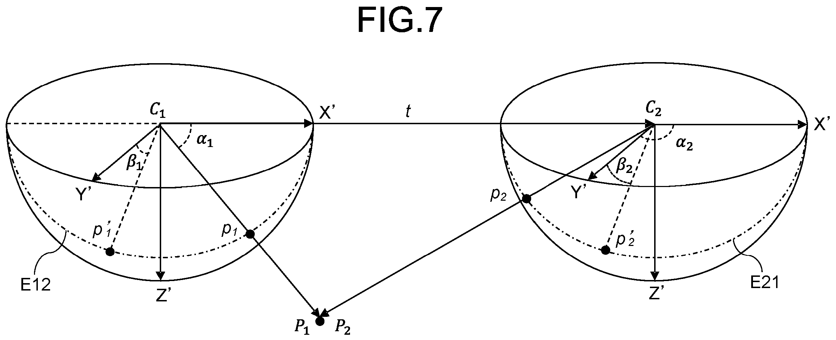

FIG. 7 illustrates a condition satisfying the epipolar constraint. As shown in FIG. 7, the camera coordinates [X1, Y1, Z1] of an article P1 imaged by the first imaging device 30a are rotated to obtain spherical coordinates [X', Y', Z'], and the camera coordinates [X2, Y2, Z2] of an article P2 imaged by the second imaging device 30b are rotated to obtain spherical coordinates [X', Y', Z'].

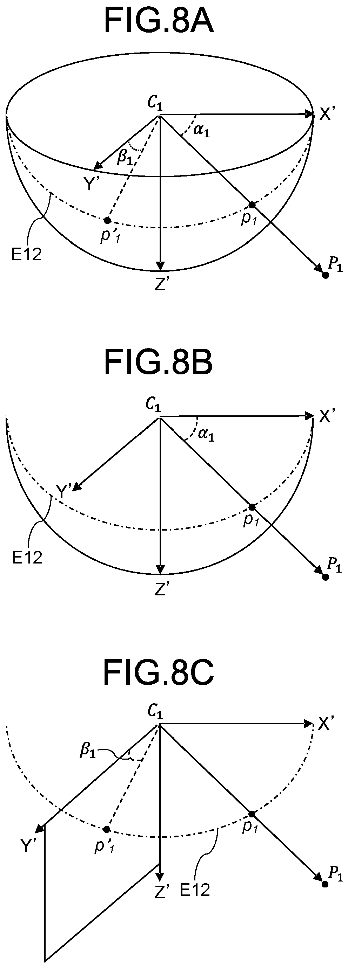

An angle $\alpha$1 formed by a vector C1p1 and the X' axis of the first spherical coordinates is obtained (see FIG. 8B). Similarly, an angle $\alpha$2 formed by a vector C2p2 and the X' axis of the second spherical coordinates is obtained. Then, the position estimation device 20 obtains an angle $\beta$1 formed by the Y' axis and a straight line connecting p'1 and the origin C1. Here, p'1 is a point where a great circle using C1 as the origin and passing through p1 intersects a Y'Z' plane (see FIG. 8C). Similarly, the position estimation device 20 obtains an angle $\beta$2 formed by the Y' axis and a straight line connecting p'2 and the origin C2.

Here, $\cos\alpha1=p1^TX'$, $p'1^TX'=0$, $\cos\beta1=p'1^TY'$, $\cos\alpha2=p2^TX'$, $p'2^TX'=0$, and $\cos\beta2=p'2TY'$ hold. Since p'1 and p'2 are expressed by $p'1=N[p1-p1X'X']$ and $p'2=N[p2-p2X'X']$, if P1 and P2 are the same point, p'1=p'2 and $\beta1=\beta2$ hold, and the epipolar constraint is satisfied. Similarly, calculation regarding whether or not the epipolar constraint is satisfied is performed also for the second stereo spherical image coordinates and the third stereo spherical image coordinates. If the epipolar constraint is satisfied in all the stereo spherical image coordinates, the objects P imaged by the three imaging devices 30 can be identified to be in the same position. As described above, the position estimation device 20 according to the present disclosure can determine whether or not the epipolar constraint is satisfied, without calculating a fundamental matrix required for determination regarding whether or not the epipolar constraint is satisfied.

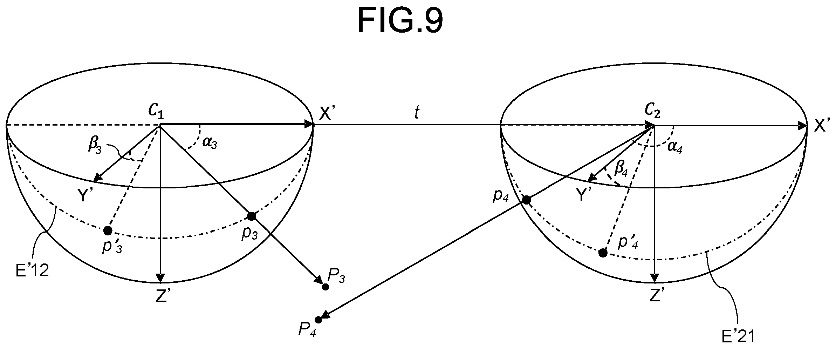

Next, a case where the epipolar constraint is not satisfied will be described. FIG. 9 illustrates the case where the epipolar constraint is not satisfied. As shown in FIG. 9, the camera coordinates [X3, Y3, Z3] of an article P3 imaged by the first imaging device 30a are rotated to obtain spherical coordinates [X', Y', Z'], and the camera coordinates [X4, Y4, Z4] of an article P4 imaged by the second imaging device 30b are rotated to obtain spherical coordinates [X', Y', Z'].

An angle $\alpha$3 formed by a vector C1p3 and the X' axis is obtained. An angle $\alpha$4 formed by a vector C2p4 and the X' axis is obtained. Then, the position estimation device 20 obtains an angle $\beta$3 formed by the Y' axis and a straight line connecting p'3 and the origin C1. The position estimation device 20 also obtains an angle $\beta$4 formed by the Y' axis and a straight line connecting p'4 and the origin C2.

Here, p'3 and p'4 are expressed by $p'3=N[p3-p3X'X']$ and $p'4=N[p4-p4X'X']$, but P3 and P4 are different points. Accordingly, p'3=p'4 and $\beta3=\beta4$ do not hold, and thus the epipolar constraint is not satisfied.

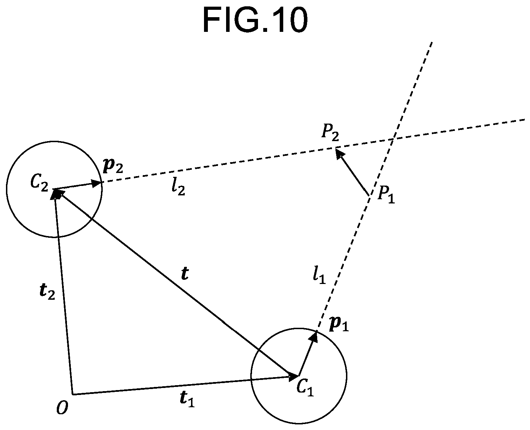

Next, calculation of an intersection of two three-dimensional vectors will be described. FIG. 10 illustrates calculation of the intersection of the vectors. As shown in FIG. 10, assuming that a length between C1 and P1 is l1 and a length between C2 and P2 is l2, a vector OP1 can be given by OP1=t1+l1p1, and a vector OP2 can be given by OP2=t2+l2p2. In addition, a vector P1P2 is orthogonal to a vector C1p1, and a vector P1P2 is orthogonal to a vector C2p2. Thus, l1 and l2 can be calculated by solving these simultaneous equations.

<Processing procedure of position estimation device 20>

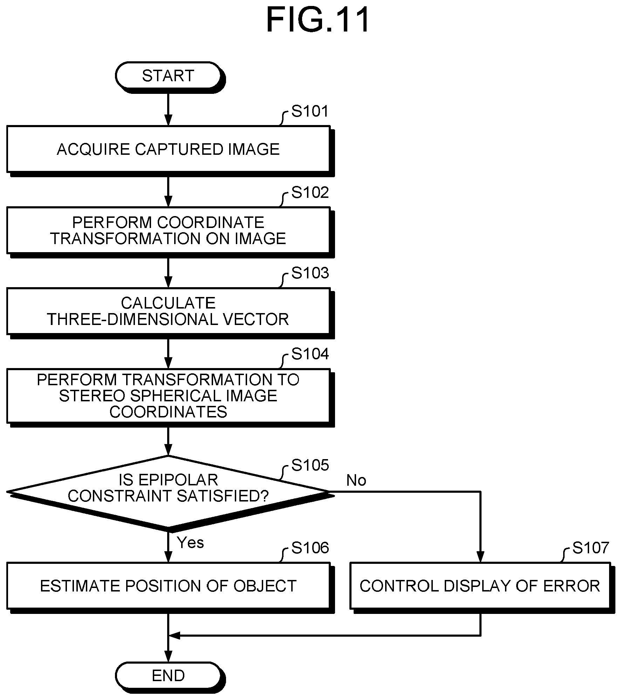

A processing procedure of the position estimation device 20 shown in FIG. 1 will be described. FIG. 11 is a flowchart showing the processing procedure of the position estimation device 20 shown in FIG. 1. As shown in FIG. 11, the position estimation device 20 acquires captured images (step S101). The position estimation device 20 performs coordinate transformation on the acquired images (step S102), and calculates the three-dimensional vectors of predetermined coordinate points (step S103).

Then, the position estimation device 20 transforms the image coordinates of each image to stereo spherical image coordinates, using image data acquired from the two imaging devices 30 (step S104). The position estimation device 20 determines whether or not the epipolar constraint is satisfied, based on vector information on the predetermined coordinate points in the stereo spherical image coordinates (step S105).

If the position estimation device 20 determines that the epipolar constraint is satisfied (step S105: Yes), coordinate points for which the determination has been made are estimated to correspond to the position of an object (step S106) and the process ends. If the position estimation device 20 determines that the epipolar constraint is not satisfied (step S105: No), the predetermined display 21 is controlled to display error information (step S107) and the process ends.

As described above, in embodiment 1, the position estimation system 10 includes the position estimation device 20 and the three imaging devices 30. The imaging devices 30 are arranged such that the imaging positions of the imaging devices 30 form a triangle. The position estimation device 20 acquires captured images of the object P from the imaging devices 30. The position estimation device 20 performs coordinate transformation based on the image coordinates, calculates the three-dimensional vectors for the object P, generates stereo spherical image coordinates based on the captured images of the two imaging devices 30, and determines whether or not the epipolar constraint is satisfied. Then, if the three-dimensional vectors for the object P satisfy the epipolar constraint, the position estimation device 20 estimates that the coordinate points satisfying the epipolar constraint correspond to the coordinates of the object P.

In embodiment 1, the case where the position estimation device 20 determines that the epipolar constraint is satisfied if p'1=p'2 and β1=β2 hold with respect to the relationship between p'1 and p'2, is described. However, an error in the arranged positions of the imaging devices 30 may be assumed, and if a difference between p'1 and p'2 and a difference between β1 and β2 are smaller than a predetermined threshold, the position estimation device 20 may determine that the epipolar constraint is satisfied.

[Embodiment 2]

In embodiment 1, the case where the object P is imaged by a plurality of the imaging devices 30 and the position of the object P is estimated based on the image data, is described. In embodiment 2, a case where the position of an article 70 is identified and the positions of joint points of a person A are estimated, and the person A taking the article 70 is identified, will be described. The same parts as those in embodiment 1 are denoted by the same reference characters and detailed description thereof is omitted.

<Outline of position estimation system 40>

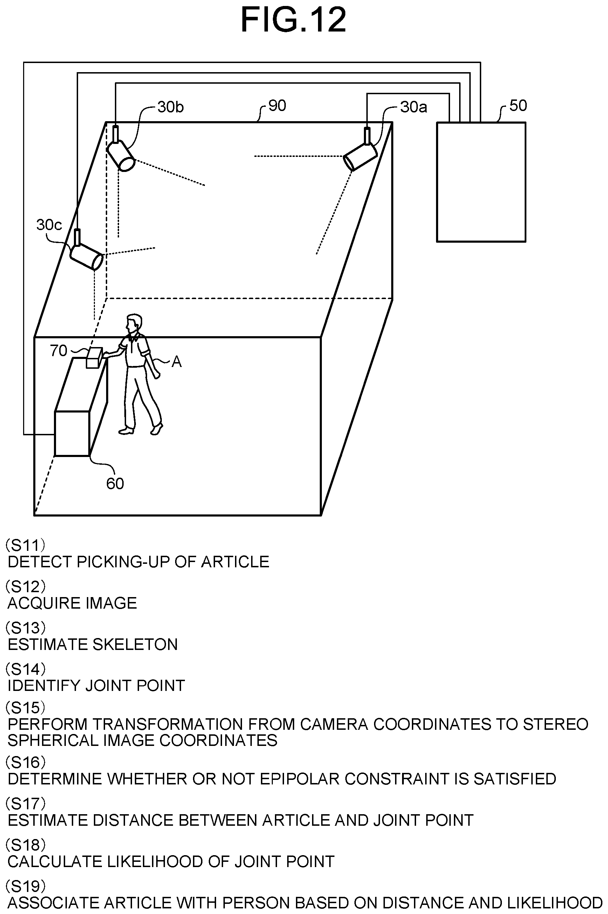

FIG. 12 is a diagram showing an outline of a position estimation system 40 according to embodiment 2. As shown in FIG. 12, the position estimation system 40 includes a position estimation device 50 and three imaging devices 30a, 30b, 30c. The three imaging devices 30 are arranged on the ceiling of a room 90 such that imaging positions of the imaging devices 30 form a triangle. In the room 90, a shelf on which the article 70 is placed and which is provided with a weight sensor 60 is placed.

When the article 70 is taken out from the shelf by the person A, the position estimation device 50 detects the taking-out of the article, based on data from the weight sensor 60 (S11). The position estimation device 50 acquires images of the person A from the imaging devices 30 (S12). Then, the position estimation device 50 estimates a skeleton of the person A from the image data (S13), and identifies a joint point for a neck, an elbow, a wrist, or the like (S14).

The position estimation device 50 transforms the image data including the joint point, from camera coordinates to stereo spherical image coordinates (S15), and determines whether or not the epipolar constraint is satisfied (S16). If the epipolar constraint is satisfied, the position estimation device 50 estimates a distance between the article and the joint point (S17). Then, the position estimation device 50 calculates the likelihood of the joint point, based on an average distance and variance thereof, which are calculated in advance, and on the estimated distance between the article and the joint point, in order to determine whether or not the person A has taken out the article 70 (S18), and associates the article 70 with the person A, based on the distance and the likelihood (S19).

As described above, the position estimation system 40 includes the position estimation device 50, the three imaging devices 30, and the shelf provided with the weight sensor 60. When the article 70 is picked up by the person A, the position estimation device 50 detects the picking-up of the article 70, based on a change in weight, and acquires images including the person A from the imaging devices 30. The position estimation device 50 estimates a skeleton of the person A based on the image data, and identifies a joint point for a neck, an elbow, a wrist, or the like of the person A. Then, the position estimation device 50 performs transformation from image coordinates to stereo spherical image coordinates, determines whether or not the epipolar constraint is satisfied in each pair of the stereo spherical image coordinates, and estimates the position of the joint point of the person A if the epipolar constraint is satisfied. The position estimation device 50 calculates the distance between the joint point and the article 70. The position estimation device 50 calculates the likelihood, based on the average distance and variance thereof, which are prepared in advance, between the joint point and the article 70 and on the calculated distance between the joint point and the article 70, and associates the article 70 with the person A.

<System configuration of position estimation system 40>

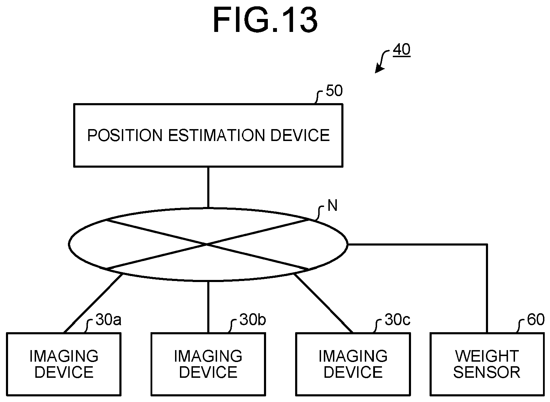

The system configuration of the position estimation system 40 shown in FIG. 12 will be described. FIG. 13 is a diagram showing the system configuration of the position estimation system 40 shown in FIG. 12. As shown in FIG. 13, the position estimation system 40 includes the three imaging devices 30, the position estimation device 50, and the weight sensor 60 which are connected via the network N.

The position estimation device 50 performs a process of receiving a signal from the weight sensor 60 and detecting picking-up of an article, a process of acquiring images from the imaging devices 30, a process of estimating a skeleton of a person based on the images, a process of identifying a joint point for a neck, an elbow, a wrist, or the like based on the result of the estimated skeleton, a process of transforming the image coordinates of the acquired images to stereo spherical image coordinates, a process of determining whether or not the epipolar constraint is satisfied in the stereo spherical image coordinates, a process of estimating the position of the joint point, a process of calculating a distance and variance thereof between the article and the joint point, a process of calculating the likelihood from the distance and the variance thereof, a process of associating the article with the person based on the likelihood, etc. When the article is picked up, the weight sensor 60 performs a process of notifying the position estimation device 50 of a change in weight.

<Configuration of position estimation device 50>

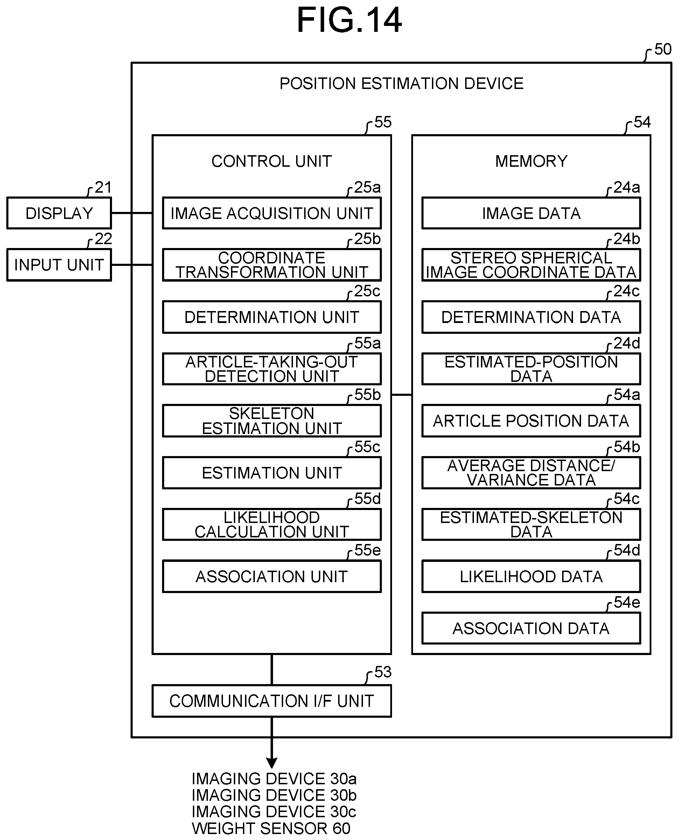

The configuration of the position estimation device 50 shown in FIG. 12 will be described. FIG. 14 is a functional block diagram showing the configuration of the position estimation device 50 shown in FIG. 12. As shown in FIG. 14, the position estimation device 50 includes a display 21, an input unit 22, a communication I/F unit 53, a memory 54, and a control unit 55. The communication I/F unit 53 is a communication interface for communicating with the imaging devices 30a, 30b, 30c and the weight sensor 60 via the network N.

The memory 54 is a memory device such as a hard disk device or a non-volatile memory, and stores therein image data 24a, stereo spherical image coordinate data 24b, determination data 24c, estimated-position data 24d, article position data 54a, average distance/variance data 54b, estimated-skeleton data 54c, likelihood data 54d, and association data 54e. The article position data 54a refers to data in which the weight sensor 60 is associated with the position of the article 70. The average distance/variance data 54b refers to data of an average distance and variance thereof, calculated in advance, between the joint point and the article 70 when the article is taken out. The estimated-skeleton data 54c refers to data in which a skeleton of the person A is estimated. The likelihood data 54d refers to data in which a probability density function is calculated as the likelihood, from the distance between the article 70 and the joint point of the person A and the average distance and the variance thereof, calculated in advance, between the article 70 and the joint point. The association data 54e refers to data in which the person A is associated with the article 70, based on the likelihood data 54d.

The control unit 55 is a controller for controlling the entire position estimation device 50, and includes an image acquisition unit 25a, a coordinate transformation unit 25b, a determination unit 25c, an article-taking-out detection unit 55a, a skeleton estimation unit 55b, an estimation unit 55c, a likelihood calculation unit 55d, and an association unit 55e. Specifically, programs corresponding to these units are loaded in a CPU and are executed, whereby processes respectively corresponding to the image acquisition unit 25a, the coordinate transformation unit 25b, the determination unit 25c, the article-taking-out detection unit 55a, the skeleton estimation unit 55b, the estimation unit 55c, the likelihood calculation unit 55d, and the association unit 55e, are executed.

The article-taking-out detection unit 55a is a processing unit that detects taking-out of an article when the article is taken out from a shelf. Specifically, when the article is taken out from the shelf provided with the weight sensor 60, the article-taking-out detection unit 55a detects the taking-out of the article 70 by receiving a signal indicating a change in weight from the weight sensor 60. A plurality of the weight sensors 60 are provided with sensor IDs, and each of sensor IDs is associated with each of the articles 70. Thus, upon receiving the sensor ID from the weight sensor 60, the article-taking-out detection unit 55a can identify the position of the taken out article 70 by referring to the article position data 54a in which the sensor ID is associated with the position of the article 70.

The skeleton estimation unit 55b performs a process of estimating a skeleton of the person A included in the image data 24a, based on the image data 24a acquired from the imaging devices 30. Specifically, a trained model for estimating a skeleton is downloaded in advance from a server device or the like (not shown), and the skeleton estimation unit 55b inputs the acquired image data 24a to the trained model to estimate a skeleton of the person A. The trained model is generated by inputting teacher data composed of many sets of data to a convolutional neural network (CNN), and, for example, performing back propagation based on correct answer data and repeating supervised learning to determine the weight of each path.

The estimation unit 55c identifies joint points for a neck, an elbow, and a wrist in the skeleton estimated by the skeleton estimation unit 55b, and performs coordinate transformation of the acquired image data 24a in the coordinate transformation unit 25b. If the determination unit 25c determines that the epipolar constraint is satisfied with respect to the coordinates of a joint point, the estimation unit 55c estimates that acquired coordinate points of the joint point correspond to the actual coordinate position of the joint point.

The likelihood calculation unit 55d is a processing unit that calculates the likelihood, based on the distance between the article 70 and the position of the joint point estimated by the estimation unit 55c, and on the average distance/variance data 54b. Specifically, the likelihood calculation unit 55d calculates the distance between the article 70 and the position, estimated by the estimation unit 55c, of each of the joint points for a neck, an elbow, and a wrist. Then, the likelihood calculation unit 55d reads out the average distance/variance data 54b referring to the data of the average distance and variance thereof, calculated in advance, between the article 70 and each joint point, and calculates the likelihood using the probability density function, based on the distance, the average distance, and the variance thereof.

The association unit 55e performs a process of associating a person with the article 70, based on the distance between the article 70 and each joint point and the likelihood calculated by the likelihood calculation unit 55d. Specifically, if the image data 24a includes only one person, the person is associated with the article. In a case where the image data 24a includes two or more persons, if the estimation unit 55c can estimate the corresponding joint points of the two or more persons, the article 70 is associated with the person whose joint point is closest to the article 70.

On the other hand, in a case where the corresponding joint points cannot be estimated, if the wrist of any one of the persons can be estimated as a joint point, the article 70 is associated with the person whose joint point is closest to the article 70. In a case where the corresponding joint points cannot be estimated, if the wrist of any one of the persons cannot be estimated as a joint point, the article 70 is associated with the person with a largest likelihood.

<Calculation of likelihood>

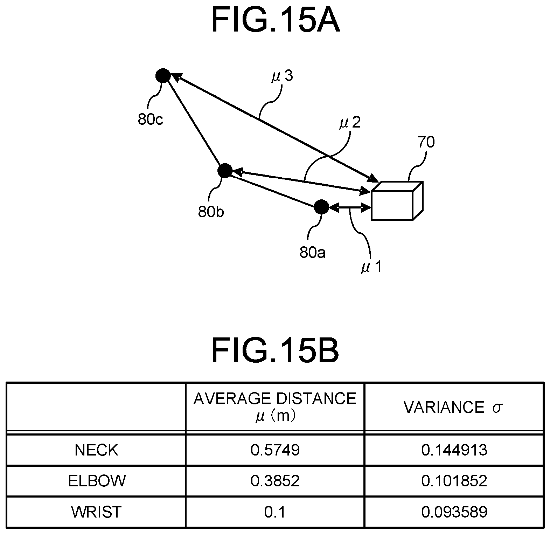

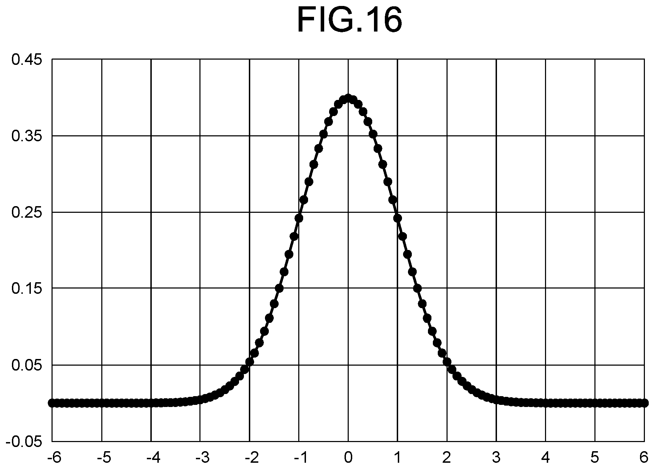

Calculation of the likelihood by the position estimation device 50 will be described with reference to FIGS. 15A and 15B, and FIG. 16. FIGS. 15A and 15B illustrate the distance between each joint point and the article. As shown in FIG. 15A, assuming that a distance between the article 70 and a wrist 80a is $\mu 1$, a distance between the article 70 and an elbow 80b is $\mu 2$, and a distance between the article 70 and a neck 80c is $\mu 3$, a plurality of distances are measured for each of $\mu 1$, $\mu 2$, $\mu 3$ when the article 70 is actually taken out, and an average distance to each joint point and variance of the distance are calculated in advance, and are stored in the memory 54 as the average distance/variance data 54b.

For example, as shown in FIG. 15B, a joint point "neck" is associated with an average distance $\mu$ "0.5749" and a variance $\alpha$ "0.144913", a joint point "elbow" is made to correspond to an average distance $\mu$ "0.3852" and a variance $\alpha$ "0.101852", and a joint point "wrist" is made to correspond to an average distance $\mu$ "0.1" and a variance $\alpha$ "0.093589".

The likelihood calculation unit 55d reads the average distance/variance data 54b from the memory 54, and calculates the likelihood using a probability density function, based on the average distance $\mu$, the variance $\alpha$, and the distance between the article 70 and the position, estimated by the estimation unit 55c, of each joint point. FIG. 16 shows one example of calculation of the probability density function where $\mu=0$ and $\alpha=1$. As shown in FIG. 16, the probability density function gives a larger probability value with respect to a distance between each joint and the article 70 when the article 70 is being taken out, and gives a smaller probability value with respect to a distance between each joint and the article 70 when the article 70 is not being taken out.

<Processing procedure of position estimation device 50>

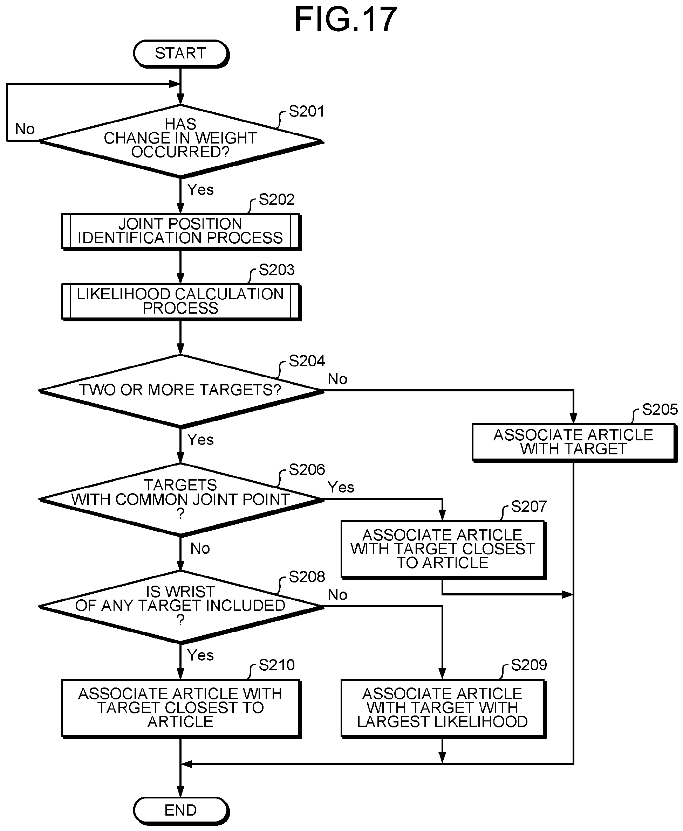

A processing procedure of the position estimation device 50 will be described. FIG. 17 is a flowchart showing the processing procedure of the position estimation device 50 shown in FIG. 12. As shown in FIG. 17, the position estimation device 50 determines whether or not a change in weight occurs in the weight sensor 60 (step S201). The position estimation device 50 performs a joint position identification process (step S202).

Thereafter, the position estimation device 50 performs a likelihood calculation process (step S203). The position estimation device 50 determines whether or not the number of persons (targets) to be associated with the article 70 is two or more (step S204). If the number of the targets is less than two (step S204: No), the position estimation device 50 associates the article 70 with the target (step S205), and ends the process.

On the other hand, if the number of the targets is two or more (step S204: Yes), the position estimation device 50 determines whether or not the identified joint positions of the targets indicate a common joint point (step S206). If the identified joint positions of the targets indicate a common joint point (step S206: Yes), the position estimation device 50 associates the article 70 with the target whose joint point is closest to the article 70 (step S207), and the process ends.

On the other hand, if the identified joint point positions of the targets do not indicate a common joint point (S206: No), the position estimation device 50 determines whether or not a wrist is included in the joint points of any one of the targets (step S208). If a wrist is not included in the joint points of any one of the targets (step S208: No), the position estimation device 50 associates the article 70 with the target with a largest likelihood (step S209), and ends the process.

On the other hand, if a wrist is included in the joint points of any one of the targets (step S208: Yes), the position estimation device 50 associates the article with the target whose wrist is closest to the article 70 (step S210), and ends the process.

<Processing procedure of joint position identification process>

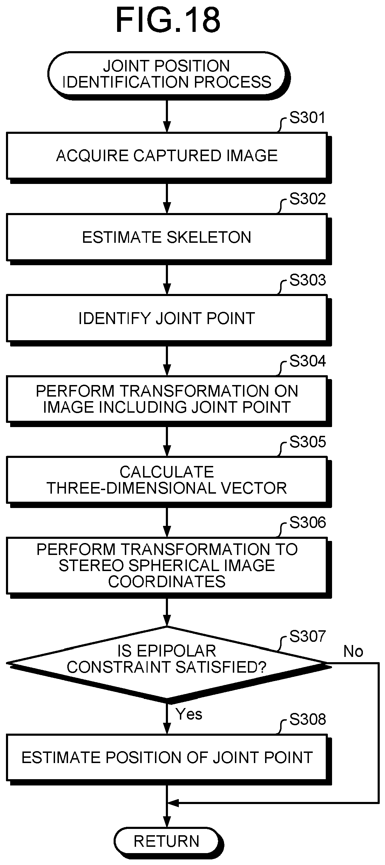

A processing procedure of the joint position identification process shown in FIG. 17 will be described. FIG. 18 is a flowchart showing the processing procedure of the joint position identification process. As shown in FIG. 18, the position estimation device 50 acquires captured images from the imaging devices 30 (step S301). The position estimation device 50 estimates a skeleton of a person included in each image (step S302). Thereafter, the position estimation device 50 identifies a joint point for a wrist, an elbow, a neck, or the like of the target from the estimated skeleton (S303).

The position estimation device 50 performs coordinate transformation on the image including the identified joint point (step S304), and calculates three-dimensional vectors (step S305). Thereafter, the position estimation device 50 uses the image data of the two imaging devices 30 to transform the image coordinates of each image to stereo spherical image coordinates (step S306). The position estimation device 50 determines whether or not the epipolar constraint is satisfied, based on vector information on the joint points in the stereo spherical image coordinates (step S307).

If the position estimation device 50 determines that the epipolar constraint is satisfied (step S307: Yes), the position estimation device 50 estimates that coordinate points for which the determination is made correspond to the position of the joint point (step S308), and the process proceeds to step S203 in FIG. 17. If the position estimation device 50 determines that the epipolar constraint is not satisfied (step S307: No), the process proceeds to step S203 in FIG. 17.

<Processing procedure of likelihood calculation process>

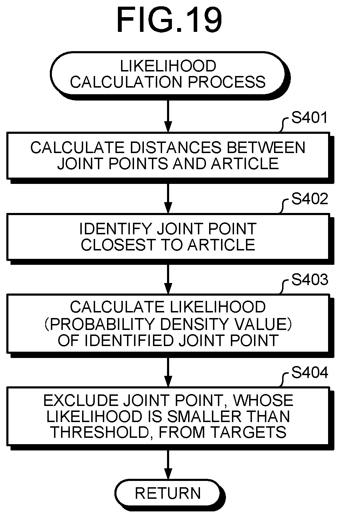

A processing procedure of the likelihood calculation process shown in FIG. 19 will be described. FIG. 19 is a flowchart showing the processing procedure of the likelihood calculation process. As shown in FIG. 19, the position estimation device 50 calculates distances from the article 70 to joint points (step S401). The position estimation device 50 identifies the joint point closest to the article 70 (step S402).

The position estimation device 50 calculates the likelihood (probability density value) of the identified joint point (step S403). Thereafter, if the likelihood is smaller than a threshold, the position estimation device 50 excludes the joint point from the determination process (step S404), and the process proceeds to step S204 in FIG. 17.

As described above, in embodiment 2, the position estimation system 40 includes the three imaging devices 30, the position estimation device 50, and the weight sensor 60. The imaging devices 30 are arranged such that the imaging positions of the imaging devices 30 form a triangle. When the article 70 is picked up by the person A, the position estimation device 50 detects the picking-up of the article 70 based on a change in weight, and identifies the position of the article from the sensor ID. Then, the position estimation device 50 acquires images including the person A from the imaging devices 30. The position estimation device 50 estimates a skeleton of the person based on the image data, and identifies a joint point for a neck, an elbow, a wrist, or the like of the person. Thereafter, the position estimation device 50 performs transformation from image coordinates to stereo spherical image coordinates, and then determines whether or not the epipolar constraint is satisfied in each pair of the stereo spherical image coordinates. If the epipolar constraint is satisfied, the position of a joint of the person A is estimated. Then, the position estimation device 50 calculates the likelihood, based on the distance between the joint point and the position of the article 70 and on the average distance of the joint point and variance thereof, calculated in advance, and associates the article 70 with the person A.

<Relationship with hardware>

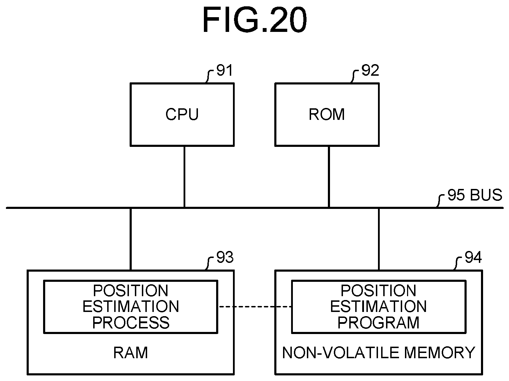

The correspondence between the position estimation device 20 of the position estimation system 10 according to embodiment 1 and the main hardware configuration of a computer will be described. FIG. 20 is a diagram showing one example of the hardware configuration.

In general, a computer is configured such that a CPU 91, a ROM 92, a RAM 93, a non-volatile memory 94, etc. are connected via a bus 95. A hard disk device may be provided instead of the non-volatile memory 94. For convenience of description, only the basic hardware configuration is shown in FIG. 20.

Here, a program, etc. required to boot an operating system (hereinafter, simply referred to as "OS") is stored in the ROM 92 or the non-volatile memory 94, and the CPU 91 reads and executes the program for the OS from the ROM 92 or the non-volatile memory 94 when power is supplied.

On the other hand, various application programs to be operated on the OS is stored in the non-volatile memory 94, and the CPU 91 uses the RAM 93 as a main memory and executes an application program to execute a process corresponding to the application.

The position estimation program of the position estimation device 20 of the position estimation system 10 according to embodiment 1 is also stored in the non-volatile memory 94 or the like, similar to the other application programs, and the CPU 91 loads and executes a corresponding operating management program. In the case of the position estimation device 20 of the position estimation system 10 according to embodiment 1, a position estimation program including routines respectively corresponding to the image acquisition unit 25a, the coordinate transformation unit 25b, the determination unit 25c, and the estimation unit 25d shown in FIG. 4 is stored in the non-volatile memory 94 or the like. The position estimation program is loaded and executed by the CPU 91, whereby a position estimation process corresponding to the image acquisition unit 25a, the coordinate transformation unit 25b, the determination unit 25c, and the estimation unit 25d is generated.

A position estimation system according to one aspect of the present disclosure includes three imaging devices, and a position estimation device configured to estimate a position of an object in a three-dimensional space, based on images captured by the imaging devices. The three imaging devices are arranged such that imaging positions of the imaging devices form a triangle. The position estimation device includes a coordinate transformation unit configured to respectively transform coordinate points of the object in image coordinates of the imaging devices to coordinate points in stereo spherical image coordinates, a determination unit configured to determine whether or not the coordinate points of two of the imaging devices in the stereo spherical image coordinates satisfy an epipolar constraint, and an estimation unit configured to estimate that the coordinate points, which are determined by the determination unit to satisfy the epipolar constraint, correspond to a coordinate position of the object.

In the above configuration, the coordinate transformation unit transforms a coordinate point of the object in image coordinates captured by a first imaging device to a coordinate point p1 in the stereo spherical image coordinates, transforms a coordinate point of the object in image coordinates captured by a second imaging device to a coordinate point p2 in the stereo spherical image coordinates, and transforms a coordinate point of the object in image coordinates captured by a third imaging device to a coordinate point p3 in the stereo spherical image coordinates.

In the above configuration, if a coordinate point p'1 as an intersection of a yz plane and a great circle passing through the coordinate point p1 in a stereo spherical image coordinate system using an imaging position of the first imaging device as an origin C1 is equal to a coordinate point p'2 as an intersection of a yz plane and a great circle passing through the coordinate point p2 in a stereo spherical image coordinate system using an imaging position of the second imaging device as an origin C2, and an angle $\beta1$ formed by a y axis and a straight line connecting the coordinate point p'1 and the origin of the stereo spherical image coordinates is equal to an angle $\beta2$ formed by a y axis and a straight line connecting the coordinate point p'2 and the origin of the stereo spherical image coordinates, the determination unit determines that the coordinate point p'1 of the first imaging device and the coordinate point p'2 of the second imaging device in the stereo spherical image coordinates satisfy the epipolar constraint.

In the above configuration, the position estimation device further includes a skeleton estimation unit configured to estimate a skeleton of a person, as the object, imaged by each imaging device. The estimation unit estimates a coordinate position of a neck or a wrist in the skeleton estimated by the skeleton estimation unit.

In the above configuration, the position estimation device further includes an article-take-out detection unit configured to detect, based on the coordinate position of the wrist estimated by the estimation unit and on position information acquired when a predetermined article has been taken out, whether or not the article has been taken out, and an association unit configured to associate, when the article-take-out detection unit detects that the article has been taken out, the taken out article with a person whose wrist is closest to the article.

In the above configuration, the position estimation device further includes a skeleton estimation unit configured to estimate a skeleton of a person, as the object, imaged by each imaging device. The position estimation device includes a second estimation unit configured to estimate coordinate positions of a neck, an elbow, and a wrist in the skeleton estimated by the skeleton estimation unit, a likelihood calculation unit configured to calculate likelihood, based on average distances and variance thereof from the article to the coordinate positions of the neck, the elbow, and the wrist, and a second association unit configured to associate the article with the person, based on a calculation result by the likelihood calculation unit.

A position estimation device according to one aspect of the present disclosure estimates a position of an object in a three-dimensional space, based on images captured by three imaging devices arranged such that imaging positions of the imaging devices form a triangle. The position estimation device includes a coordinate transformation unit configured to respectively transform coordinate points of the object in image coordinates of the imaging devices to coordinate points in stereo spherical image coordinates, a determination unit configured to determine whether or not the coordinate points of two of the imaging devices in the stereo spherical image coordinates satisfy an epipolar constraint, and an estimation unit configured to estimate that the coordinate points, determined by the determination unit to satisfy the epipolar constraint, correspond to a coordinate position of the object.

A position estimation method according to one aspect of the present disclosure is performed in a position estimation system including three imaging devices and a position estimation device configured to estimate a position of an object in a three-dimensional space based on images captured by the imaging devices. The three imaging devices are arranged such that imaging positions of the imaging devices form a triangle. The position estimation method includes a coordinate transformation step in which the position estimation device respectively transforms coordinate points of the object in image coordinates of the imaging devices to coordinate points in stereo spherical image coordinates, a determination step in which the position estimation device determines whether or not the coordinate points of two of the imaging devices in the stereo spherical image coordinates satisfy an epipolar constraint, and an estimation step in which the position estimation device estimates that the coordinate points, determined by the determination to satisfy the epipolar constraint, correspond to a coordinate position of the object.

A computer program product for position estimation according to one aspect of the present disclosure is used in a device configured to estimate a position of an object in a three-dimensional space based on images captured by three imaging devices arranged such that imaging positions of the imaging devices form a triangle. The computer program product causes the device to execute a coordinate transformation procedure for respectively transforming coordinate points of the object in image coordinates of the imaging devices to coordinate points in stereo spherical image coordinates, a determination procedure for determining whether or not the coordinate points of two of the imaging devices in the stereo spherical image coordinates satisfy an epipolar constraint, and an estimation procedure for estimating that the coordinate points, determined by the determination procedure to satisfy the epipolar constraint, correspond to a coordinate position of the object.

According to the present disclosure, the position of an object in a three-dimensional space can be efficiently estimated.

The constituent elements described in each embodiment described above are conceptually functional constituent elements, and thus may not be necessarily configured as physical constituent elements, as illustrated in the drawings. That is, distributed or integrated forms of each device are not limited to the forms illustrated in the drawings, and all or some of the forms may be distributed or integrated functionally or physically in any unit depending on various loads, use statuses, or the like.

The position estimation system, the position estimation device, the position estimation method, and the position estimation program according to the present disclosure are suitable for efficiently estimating the position of an object in a three-dimensional space.

**Claims**

1. A position estimation system comprising: three imaging devices (30a, 30b, 30c); and a position estimation device (20, 50) configured to estimate a position of an object in a three-dimensional space, based on images captured by the imaging devices (30a, 30b, 30c), wherein

   the three imaging devices (30a, 30b, 30c) are arranged such that imaging positions of the imaging devices (30a, 30b, 30c) form a triangle, and
   the position estimation device (20, 50) comprises
   a coordinate transformation unit(25b) configured to respectively transform coordinate points of the object in image coordinates of the imaging devices (30a, 30b, 30c) to coordinate points in stereo spherical image coordinates,
   a determination unit (25c) configured to determine whether or not the coordinate points of two of the imaging devices (30a, 30b, 30c) in the stereo spherical image coordinates satisfy an epipolar constraint, and
   an estimation unit (25d, 55c) configured to estimate that the coordinate points correspond to one coordinate position of the object in a case where the coordinate points are determined by the determination unit (25c) to satisfy the epipolar constraint, wherein the position estimation device (50)
   estimates a skeleton of a person, as the object, in the images by each imaging device (30a, 30b, 30c),
   identifies joint points for joint parts in the skeleton,
   estimates coordinate positions of joint points satisfying the epipolar constraint, in the skeleton,
   estimates a distance between an article and each joint point,
   calculates likelihood, based on the estimated distance, and on average distances from the article to joint points and variance thereof which are prepared in advance, and
   associates the article with the person, based on the distance and the likelihood.

2. The position estimation system according to claim 1, wherein

   in a case where the images include only one person, this one person is associated with the article,
   in a case where the images include two or more persons,

      in a case where corresponding joint points of the two or more persons have been estimated, the article is associated with the person whose joint point is closest to the article,
      in a case where the corresponding joint points have not been estimated,

         in a case where the wrist of any one of the two or more persons has been estimated as the joint point, the article is associated with the person whose joint point is closest to the article,
         in a case where the wrist of any one of the persons has not been estimated as the joint point, the article is associated with the person with a largest likelihood.

3. The position estimation system according to claim 1 or 2, wherein

   the coordinate transformation unit (25b)
   transforms a coordinate point of the object in image coordinates captured by a first imaging device(30a) to a coordinate point p1 in the stereo spherical image coordinates,
   transforms a coordinate point of the object in image coordinates captured by a second imaging device(30b) to a coordinate point p2 in the stereo spherical image coordinates, and

transforms a coordinate point of the object in image coordinates captured by a third imaging device(30c) to a coordinate point p3 in the stereo spherical image coordinates.

4. The position estimation system according to claim 3, wherein

if a coordinate point p'1 as an intersection of a yz plane and a great circle passing through the coordinate point p1 in a stereo spherical image coordinate system using an imaging position of the first imaging device (30a) as an origin C1 is equal to a coordinate point p'2 as an intersection of a yz plane and a great circle passing through the coordinate point p2 in a stereo spherical image coordinate system using an imaging position of the second imaging device (30b) as an origin C2, and
an angle β1 formed by a y axis and a straight line connecting the coordinate point p'1 and the origin of the stereo spherical image coordinates is equal to an angle β2 formed by a y axis and a straight line connecting the coordinate point p'2 and the origin of the stereo spherical image coordinates,
the determination unit (25c) determines that the coordinate point p'1 of the first imaging device (30a) and the coordinate point p'2 of the second imaging device (30b) in the stereo spherical image coordinates satisfy the epipolar constraint.

5. The position estimation system according to claim 1, wherein

the position estimation device (50) further comprises a skeleton estimation unit(55b) configured to estimate a skeleton of a person, as the object, imaged by each imaging device (30a, 30b, 30c), and
the estimation unit(55c) estimates a coordinate position of a neck or a wrist in the skeleton estimated by the skeleton estimation unit(55b).

6. The position estimation system according to claim 5, wherein

the position estimation device (20, 50) further comprises
an article-take-out detection unit configured to detect, based on the coordinate position of the wrist estimated by the estimation unit (25d, 55c) and on position information of an article acquired when the article has been taken out, whether or not the article has been taken out, and
an association unit (55e) configured to associate, when the article-take-out detection unit detects that the article has been taken out, the taken out article with a person whose wrist is closest to the article.

7. The position estimation system according to claim 1, wherein

the position estimation device (50) further comprises a skeleton estimation unit(55b) configured to estimate a skeleton of a person, as the object, imaged by each imaging device (30a, 30b, 30c),
the estimation unit(55c) estimates coordinate positions of a neck, an elbow, and a wrist in the skeleton estimated by the skeleton estimation unit(55b),
a likelihood calculation unit configured to calculate likelihood using a probability density function, based on average distances and variance thereof from the article to the coordinate positions of the neck, the elbow, and the wrist, the probability density function giving a larger probability value with respect to a distance between each joint point and the article when the article is being taken out, and
an association unit (55e) configured to associate the article with the person, based on a calculation result by the likelihood calculation unit.

8. The position estimation device (20, 50) according to any one of claims 1 to 7 comprising:

the coordinate transformation unit (25b),
the determination unit (25c), and
the estimation unit (25d, 55c).

9. A computer-implemented position estimation method for estimating a position of an object in a three-dimensional space based on images captured by three imaging devices (30a, 30b, 30c) arranged such that imaging positions of the imaging devices (30a, 30b, 30c) form a triangle, the position estimation method including

transforming coordinate points of the object in image coordinates of the imaging devices (30a, 30b, 30c) respectively to coordinate points in stereo spherical image coordinates;

determining whether or not the coordinate points of two of the imaging devices (30a, 30b, 30c) in the stereo spherical image coordinates satisfy an epipolar constraint, and

estimating that the coordinate points correspond to one coordinate position of the object in a case where the coordinate points are determined to satisfy the epipolar constraint,

wherein the method further includes

estimating a skeleton of a person, as the object, in the images by each imaging device (30a, 30b, 30c),

identifying joint points for joint parts in the skeleton,

estimating coordinate positions of joint points satisfyi ng the epipolar constraint, in the skeleton,

estimating a distance between an article and each joint p oint,

calculating likelihood, based on the estimated distance, and on average distances from the article to joint points and var iance thereof which are prepared in advance, and

associating the article with the person, based on the distance and the likelihood.

10. A computer program product comprising instructions which, when the program is executed by a computer, cause the computer to carry out the steps of the method of claim 9.


**Patentansprüche**

1. Ein Positionsbestimmungssystem, umfassend: drei Bildaufnahmevorrichtungen (30a, 30b, 30c); und eine Positionsbestimmungsvorrichtung (20, 50), die dazu eingerichtet ist, eine Position eines Objekts in einem dreidimensionalen Raum auf der Grundlage von durch die Bildaufnahmevorrichtungen (30a, 30b, 30c) aufgenommenen Bildern zu bestimmen, wobei

die drei Bildaufnahmevorrichtungen (30a, 30b, 30c) derart angeordnet sind, dass die Aufnahmepositionen der Bildaufnahmevorrichtungen (30a, 30b, 30c) ein Dreieck bilden, und

die Positionsbestimmungsvorrichtung (20, 50) umfasst

eine Koordinatentransformationseinheit (25b), die dazu eingerichtet ist, jeweils Koordinatenpunkte des Objekts in Bildkoordinaten der Bildaufnahmevorrichtungen (30a, 30b, 30c) in Koordinatenpunkte in stereosphärischen Bildkoordinaten zu transformieren,

eine Bestimmungseinheit (25c), die dazu eingerichtet ist zu bestimmen, ob Koordinatenpunkte von zwei der Bildaufnahmevorrichtungen (30a, 30b, 30c) in den stereosphärischen Bildkoordinaten eine Epipolarbedingung erfüllen oder nicht, und

eine Schätzeinheit (25d, 55c), die dazu eingerichtet ist zu schätzen, dass die Koordinatenpunkte einer Koordinatenposition des Objekts entsprechen, in einem Fall, in dem durch die Bestimmungseinheit (25c) bestimmt wird, dass die Koordinatenpunkte die Epipolarbedingung erfüllen, wobei die Positionsbestimmungsvorrichtung (50)

ein Skelett einer Person als das Objekt in den durch jede Bildaufnahmevorrichtung (30a, 30b, 30c) aufgenommenen Bildern schätzt,

Gelenkpunkte für Gelenkbereiche im Skelett identifiziert,

Koordinatenpositionen von Gelenkpunkten, welche die Epipolarbedingung erfüllen, im Skelett schätzt,

einen Abstand zwischen einem Gegenstand und jedem Gelenkpunkt schätzt,

eine Wahrscheinlichkeit auf der Grundlage des geschätzten Abstands sowie von im Voraus vorbereiteten mittleren Abständen vom Gegenstand zu Gelenkpunkten und deren Varianz berechnet, und

den Gegenstand der Person zuordnet, auf der Grundlage des Abstands und der Wahrscheinlichkeit.

2. Positionsbestimmungssystem nach Anspruch 1, wobei

in einem Fall, in dem die Bilder nur eine Person umfassen, diese eine Person dem Gegenstand zugeordnet wird,

in einem Fall, in dem die Bilder zwei oder mehr Personen umfassen,

in einem Fall, in dem entsprechende Gelenkpunkte der zwei oder mehr Personen geschätzt worden sind, der Gegenstand derjenigen Person zugeordnet wird, deren Gelenkpunkt dem Gegenstand am nächsten ist,

in einem Fall, in dem die entsprechenden Gelenkpunkte nicht geschätzt worden sind,

in einem Fall, in dem das Handgelenk irgendeiner der zwei oder mehr Personen als der Gelenkpunkt geschätzt worden ist, der Gegenstand derjenigen Person zugeordnet wird, deren Gelenkpunkt dem Gegenstand am nächsten ist,

in einem Fall, in dem das Handgelenk keiner der Personen als Gelenkpunkt geschätzt worden ist, der Gegenstand der Person mit der größten Wahrscheinlichkeit zugeordnet wird.

3. Positionsbestimmungssystem nach Anspruch 1 oder 2, wobei

die Koordinatentransformationseinheit (25b)
einen Koordinatenpunkt des Objekts in Bildkoordinaten, die durch eine erste Bildaufnahmevorrichtung (30a) aufgenommen wurden, in einen Koordinatenpunkt p1 in den stereosphärischen Bildkoordinaten transformiert, einen Koordinatenpunkt des Objekts in Bildkoordinaten, die durch eine zweite Bildaufnahmevorrichtung (30b) aufgenommen wurden, in einen Koordinatenpunkt p2 in den stereosphärischen Bildkoordinaten transformiert, und
einen Koordinatenpunkt des Objekts in Bildkoordinaten, die durch eine dritte Bildaufnahmevorrichtung (30c) aufgenommen wurden, in einen Koordinatenpunkt p3 in den stereosphärischen Bildkoordinaten transformiert.

4. Positionsbestimmungssystem nach Anspruch 3, wobei

falls ein Koordinatenpunkt p'1 als ein Schnittpunkt einer yz-Ebene und eines Großkreises, der durch den Koordinatenpunkt p1 in einem stereosphärischen Bildkoordinatensystem verläuft, das den Aufnahmepunkt der ersten Bildaufnahmevorrichtung (30a) als Ursprung C1 verwendet, gleich einem Koordinatenpunkt p'2 als einem Schnittpunkt einer yz-Ebene und eines Großkreises, der durch den Koordinatenpunkt p2 in einem stereosphärischen Bildkoordinatensystem verläuft, das den Aufnahmepunkt der zweiten Bildaufnahmevorrichtung (30b) als Ursprung C2 verwendet, ist, und
ein Winkel $\beta 1$, der durch eine y-Achse und eine Gerade, die den Koordinatenpunkt p'1 und den Ursprung der stereosphärischen Bildkoordinaten verbindet, gebildet wird, gleich einem Winkel $\beta 2$ ist, der durch eine y-Achse und eine Gerade, die den Koordinatenpunkt p'2 und den Ursprung der stereosphärischen Bildkoordinaten verbindet, gebildet wird,
bestimmt die Bestimmungseinheit (25c), dass der Koordinatenpunkt p'1 der ersten Bildaufnahmevorrichtung (30a) und der Koordinatenpunkt p'2 der zweiten Bildaufnahmevorrichtung (30b) in den stereosphärischen Bildkoordinaten die Epipolarbedingung erfüllen.

5. Positionsbestimmungssystem nach Anspruch 1, wobei

die Positionsbestimmungsvorrichtung (50) ferner eine Skelettschätzeinheit (55b) umfasst, die dazu eingerichtet ist, ein Skelett einer Person als das Objekt, das durch jede Bildaufnahmevorrichtung (30a, 30b, 30c) aufgenommen wird, zu schätzen, und
die Schätzeinheit (55c) eine Koordinatenposition eines Halses oder eines Handgelenks in dem durch die Skelettschätzeinheit (55b) geschätzten Skelett schätzt.

6. Positionsbestimmungssystem nach Anspruch 5, wobei

die Positionsbestimmungsvorrichtung (20, 50) ferner umfasst
eine Artikel-Entnahmeerkennungseinheit, die dazu eingerichtet ist, auf der Grundlage der durch die Schätzeinheit (25d, 55c) geschätzten Koordinatenposition des Handgelenks sowie von Positionsinformationen eines Artikels, die beim Entnehmen des Artikels erfasst werden, zu erkennen, ob der Artikel entnommen worden ist oder nicht, und
eine Zuordnungseinheit (55e), die dazu eingerichtet ist, wenn die Artikel-Entnahmeerkennungseinheit erkennt, dass der Artikel entnommen worden ist, den entnommenen Artikel einer Person zuzuordnen, deren Handgelenk dem Artikel am nächsten ist.

7. Positionsbestimmungssystem nach Anspruch 1, wobei

die Positionsbestimmungsvorrichtung (50) ferner eine Skelettschätzeinheit (55b) umfasst, die dazu eingerichtet ist, ein Skelett einer Person als das Objekt zu schätzen, das durch jede Bildaufnahmevorrichtung (30a, 30b, 30c) aufgenommen wird,
die Schätzeinheit (55c) Koordinatenpositionen eines Halses, eines Ellenbogens und eines Handgelenks in dem durch die Skelettschätzeinheit (55b) geschätzten Skelett schätzt,
eine Wahrscheinlichkeitsberechnungseinheit, die dazu eingerichtet ist, eine Wahrscheinlichkeit unter Verwendung einer Wahrscheinlichkeitsdichtefunktion zu berechnen, auf der Grundlage von mittleren Abständen und deren Varianz zwischen dem Artikel und den Koordinatenpositionen des Halses, des Ellenbogens und des Handgelenks, wobei die Wahrscheinlichkeitsdichtefunktion einem Abstand zwischen jedem Gelenkpunkt und dem Artikel einen größeren Wahrscheinlichkeitswert zuordnet, wenn der Artikel entnommen wird, und

eine Zuordnungseinheit (55e), die dazu eingerichtet ist, den Artikel einer Person zuzuordnen, auf der Grundlage eines Berechnungsergebnisses der Wahrscheinlichkeitsberechnungseinheit.

**8.** Positionsbestimmungsvorrichtung (20, 50) nach einem der Ansprüche 1 bis 7, umfassend:

die Koordinatentransformationseinheit (25b),
die Bestimmungseinheit (25c), und
die Schätzeinheit (25d, 55c).

**9.** Computerimplementiertes Positionsbestimmungsverfahren zur Bestimmung einer Position eines Objekts in einem dreidimensionalen Raum auf der Grundlage von durch drei Bildaufnahmevorrichtungen (30a, 30b, 30c) aufgenommenen Bildern, die derart angeordnet sind, dass Aufnahmepositionen der Bildaufnahmevorrichtungen (30a, 30b, 30c) ein Dreieck bilden, wobei das Positionsbestimmungsverfahren umfasst:

das Transformieren von Koordinatenpunkten des Objekts in Bildkoordinaten der Bildaufnahmevorrichtungen (30a, 30b, 30c) jeweils in Koordinatenpunkte in stereosphärischen Bildkoordinaten,
das Bestimmen, ob Koordinatenpunkte von zwei der Bildaufnahmevorrichtungen (30a, 30b, 30c) in den stereosphärischen Bildkoordinaten eine Epipolarbedingung erfüllen oder nicht, und
das Schätzen, dass die Koordinatenpunkte einer Koordinatenposition des Objekts entsprechen, in einem Fall, in dem bestimmt wird, dass die Koordinatenpunkte die Epipolarbedingung erfüllen,
wobei das Verfahren ferner umfasst:

das Schätzen eines Skeletts einer Person, als das Objekt, in den durch jede Bildaufnahmevorrichtung (30a, 30b, 30c) aufgenommenen Bildern,
das Identifizieren von Gelenkpunkten für Gelenkbereiche im Skelett,
das Schätzen von Koordinatenpositionen von Gelenkpunkten, die die Epipolarbedingung erfüllen, im Skelett,
das Schätzen eines Abstands zwischen einem Artikel und jedem Gelenkpunkt,
das Berechnen einer Wahrscheinlichkeit auf der Grundlage des geschätzten Abstands sowie von im Voraus vorbereiteten mittleren Abständen vom Artikel zu Gelenkpunkten und deren Varianz, und
das Zuordnen des Artikels zu der Person auf der Grundlage des Abstands und der Wahrscheinlichkeit.

**10.** Computerprogrammprodukt, umfassend Instruktionen, die, wenn das Programm durch einen Computer ausgeführt wird, den Computer dazu veranlassen, die Schritte des Verfahrens nach Anspruch 9 auszuführen.

**Revendications**

**1.** Système d'estimation de position comprenant : trois dispositifs de prise de vues (30a, 30b, 30c) et un dispositif d'estimation de position (20, 50) conçu pour estimer la position d'un objet dans un espace tridimensionnel en fonction des images prises par les dispositifs de prise de vues (30a, 30b, 30c) ; et dans lequel

les trois dispositifs de prise de vues (30a, 30b, 30c) sont agencés de façon que les positions de prise de vues des dispositifs de prise de vues (30a, 30b, 30c) forment un triangle, et
le dispositif d'estimation de position (20, 50) comprend
une unité de transformation de coordonnées (25b) conçue pour transformer les points de coordonnées respectifs de l'objet, exprimés en coordonnées d'image par les dispositifs de prise de vues (30a, 30b, 30c), en points de coordonnées exprimés en coordonnées d'image sphériques stéréo,
une unité de détermination (25c) conçue pour déterminer si les points de coordonnées de deux des dispositifs de prise de vues (30a, 30b, 30c), exprimés en coordonnées d'image sphériques stéréo, satisfont une contrainte épipolaire, et
une unité d'estimation (25d, 55c) conçue pour estimer que les points de coordonnées correspondent à une position de coordonnées de l'objet lorsqu'il est déterminé par l'unité de détermination (25c) que les points de coordonnées satisfont la contrainte épipolaire ; ledit dispositif d'estimation de position (50)
estimant le squelette d'une personne, en tant qu'objet, dans les images fournies par chaque dispositif de prise de vues (30a, 30b, 30c),
identifiant des points articulaires relatifs à des parties articulaires du squelette,
estimant, dans le squelette, des positions de coordonnées de points articulaires satisfaisant la contrainte épipolaire,
estimant la distance entre un article et chaque point articulaire,
calculant une vraisemblance, en fonction de la distance estimée ainsi que des distances moyennes entre l'article et les points articulaires et de leur variance qui sont préparées à l'avance, et
associant l'article à la personne, en fonction de la distance et de la vraisemblance.

2. Système d'estimation de position selon la revendication 1, dans lequel

lorsque les images ne comprennent qu'une seule personne, cette seule personne est associée à l'article,
lorsque les images comprennent au moins deux personnes,

lorsque les points articulaires correspondants des au moins deux personnes ont été estimés, l'article est associé à la personne dont le point articulaire est le plus proche de l'article,
lorsque les points articulaires correspondants n'ont pas été estimés,

lorsque le poignet de l'une quelconque des au moins deux personnes a été estimé comme point articulaire, l'article est associé à la personne dont le point articulaire est le plus proche de l'article,
lorsque le poignet de l'une quelconque des personnes n'a pas été estimé comme point articulaire, l'article est associé à la personne présentant la plus grande vraisemblance.

3. Système d'estimation de position selon la revendication 1 ou 2, dans lequel

l'unité de transformation de coordonnées (25b)
transforme un point de coordonnées de l'objet exprimé dans des coordonnées d'image prises par un premier dispositif de prise de vues (30a) en un point de coordonnées p1 exprimé dans les coordonnées d'image sphériques stéréo,
transforme un point de coordonnées de l'objet exprimé dans des coordonnées d'image prises par un deuxième dispositif de prise de vues (30b) en un point de coordonnées p2 exprimé dans les coordonnées d'image sphériques stéréo, et
transforme un point de coordonnées de l'objet exprimé dans des coordonnées d'image prises par un troisième dispositif de prise de vues (30c) en un point de coordonnées p3 exprimé dans les coordonnées d'image sphériques stéréo.

4. Système d'estimation de position selon la revendication 3, dans lequel

si un point de coordonnées p'1, qui est l'intersection d'un plan yz et d'un grand cercle passant par le point de coordonnées p1 dans un système de coordonnées d'image sphériques stéréo utilisant la position de prise de vues du premier dispositif de prise de vues (30a) en tant qu'origine C1, est égal à un point de coordonnées p'2, qui est l'intersection d'un plan yz et d'un grand cercle passant par le point de coordonnées p2 dans un système de coordonnées d'image sphériques stéréo utilisant la position de prise de vues du deuxième dispositif de prise de vues (30b) en tant qu'origine C2, et
un angle $\beta$1 formé par un axe y et une ligne droite reliant le point de coordonnées p'1 et l'origine des coordonnées d'image sphériques stéréo est égal à un angle $\beta$2 formé par un axe y et une ligne droite reliant le point de coordonnées p'2 et l'origine des coordonnées d'image sphériques stéréo,
l'unité de détermination (25c) détermine que le point de coordonnées p'1 du premier dispositif de prise de vues (30a) et le point de coordonnées p'2 du deuxième dispositif de prise de vues (30b) dans les coordonnées d'image sphériques stéréo satisfont la contrainte épipolaire.

5. Système d'estimation de position selon la revendication 1, dans lequel

le dispositif d'estimation de position (50) comprend en outre une unité d'estimation de squelette (55b) conçue pour estimer le squelette d'une personne, en tant qu'objet, dont des vues sont prises par chaque dispositif de prise de vues (30a, 30b, 30c), et
l'unité d'estimation (55c) estime une position de coordonnées du cou ou d'un poignet du squelette estimé par l'unité d'estimation de squelette (55b).

6. Système d'estimation de position selon la revendication 5, dans lequel

le dispositif d'estimation de position (20, 50) comprend en outre

une unité de détection de retrait d'article conçue pour détecter, en fonction de la position de coordonnées du poignet estimée par l'unité d'estimation (25d, 55c) et en fonction d'informations de position d'un article acquises lorsque l'article a été retiré, si l'article a été retiré ou non, et

une unité d'association (55e) conçue pour associer, lorsque l'unité de détection de retrait d'article détecte que l'article a été retiré, l'article retiré à une personne dont le poignet est le plus proche de l'article.

7. Système d'estimation de position selon la revendication 1, dans lequel

le dispositif d'estimation de position (50) comprend en outre une unité d'estimation de squelette (55b) conçue pour estimer le squelette d'une personne, en tant qu'objet, dont des vues sont prises par chaque dispositif de prise de vues (30a, 30b, 30c),

l'unité d'estimation (55c) estime des positions de coordonnées du cou, d'un coude et d'un poignet du squelette estimé par l'unité d'estimation de squelette (55b),

une unité de calcul de vraisemblance conçue pour calculer une vraisemblance à l'aide d'une fonction de densité de probabilité, en fonction des distances moyennes et de leur variance entre l'article et les positions de coordonnées du cou, du coude et du poignet, la fonction de densité de probabilité fournissant une valeur de probabilité plus élevée par rapport à la distance entre chaque point articulaire et l'article lorsque celui-ci est en cours de retrait, et

une unité d'association (55e) conçue pour associer l'article à la personne, en fonction d'un résultat de calcul fourni par l'unité de calcul de vraisemblance.

8. Dispositif d'estimation de position (20, 50) selon l'une quelconque des revendications 1 à 7, comprenant :

l'unité de transformation de coordonnées (25b),
l'unité de détermination (25c), et
l'unité d'estimation (25d, 55c).

9. Procédé d'estimation de position mis en œuvre par ordinateur pour estimer la position d'un objet dans un espace tridimensionnel en fonction d'images prises par trois dispositifs de prise de vues (30a, 30b, 30c) agencés de façon que les positions de prise de vues des dispositifs de prise de vues (30a, 30b, 30c) forment un triangle, le procédé d'estimation de position comprenant

la transformation des points de coordonnées respectifs de l'objet, exprimés en coordonnées d'image par les dispositifs de prise de vues (30a, 30b, 30c), en points de coordonnées exprimés en coordonnées d'image sphériques stéréo,

la détermination du fait que les points de coordonnées de deux des dispositifs de prise de vues (30a, 30b, 30c), exprimés en coordonnées d'image sphériques stéréo, satisfont ou non une contrainte épipolaire, et

l'estimation que les points de coordonnées correspondent à une position de coordonnées de l'objet lorsqu'il est déterminé que les points de coordonnées satisfont la contrainte épipolaire,

le procédé comprenant en outre

l'estimation du squelette d'une personne, en tant qu'objet, dans les images fournies par chaque dispositif de prise de vues (30a, 30b, 30c),

l'identification de points articulaires relatifs à des parties articulaires du squelette,

l'estimation, dans le squelette, des positions de coordonnées de points articulaires satisfaisant la contrainte épipolaire,

l'estimation de la distance entre un article et chaque point articulaire,

le calcul d'une vraisemblance, en fonction de la distance estimée ainsi que de distances moyennes entre l'article et les points articulaires et de leur variance qui sont préparées à l'avance, et

l'association de l'article à la personne, en fonction de la distance et de la vraisemblance.

10. Produit-programme informatique comprenant des instructions qui, lorsque le programme est exécuté par un ordinateur, amènent l'ordinateur à mettre en œuvre les étapes du procédé selon la revendication 9.

# FIG.1

(S1)
ACQUIRE OBJECT IMAGE

(S2)
PERFORM TRANSFORMATION FROM CAMERA COORDINATES TO
STEREO SPHERICAL IMAGE COORDINATES

(S3)
DETERMINE WHETHER OR NOT EPIPOLAR CONSTRAINT IS SATISFIED

(S4)
ESTIMATE COORDINATES OF OBJECT

# FIG.2

EP 4 550 267 B1

# FIG.3

# FIG.4

POSITION ESTIMATION DEVICE ⌐20

## CONTROL UNIT ⌐25

IMAGE ACQUISITION UNIT ⌐25a

COORDINATE TRANSFORMATION UNIT ⌐25b

DETERMINATION UNIT ⌐25c

ESTIMATION UNIT ⌐25d

## MEMORY ⌐24

IMAGE DATA ⌐24a

STEREO SPHERICAL IMAGE COORDINATE DATA ⌐24b

DETERMINATION DATA ⌐24c

ESTIMATED-POSITION DATA ⌐24d

DISPLAY ⌐21

INPUT UNIT ⌐22

COMMUNICATION I/F UNIT ⌐23

IMAGING DEVICE 30a
IMAGING DEVICE 30b
IMAGING DEVICE 30c

# FIG.5

ORIGINAL IMAGE COORDINATES: $u^0 = (u^0, v^0)$

⬇

DISTORTION-ELIMINATED IMAGE COORDINATES: $u = (u, v)$

⬇

HOMOGENEOUS COORDINATES: $x_c = (x_c, y_c, 1)$

⬇

THREE-DIMENSIONAL DIRECTION VECTOR: p

⬇

STEREO SPHERICAL IMAGE COORDINATES: $(\alpha, \beta)$

# FIG.6

$$R = [x, y, z]$$

# FIG.7

EP 4 550 267 B1

# FIG.8A

# FIG.8B

# FIG.8C

FIG.9

EP 4 550 267 B1

## FIG.10

# FIG.11

```
                    ┌──────────────┐
                    │    START     │
                    └──────┬───────┘
                           │           ⌐S101
                           ▼
        ┌──────────────────────────────────┐
        │     ACQUIRE CAPTURED IMAGE        │
        └──────────────────┬───────────────┘
                           │           ⌐S102
                           ▼
        ┌──────────────────────────────────┐
        │       PERFORM COORDINATE          │
        │     TRANSFORMATION ON IMAGE       │
        └──────────────────┬───────────────┘
                           │           ⌐S103
                           ▼
        ┌──────────────────────────────────┐
        │           CALCULATE               │
        │     THREE-DIMENSIONAL VECTOR      │
        └──────────────────┬───────────────┘
                           │           ⌐S104
                           ▼
        ┌──────────────────────────────────┐
        │    PERFORM TRANSFORMATION TO      │
        │     STEREO SPHERICAL IMAGE        │
        │          COORDINATES              │
        └──────────────────┬───────────────┘
                           │
                           ▼           ⌐S105
                      ◇─────────◇                    No
                   ◇   IS EPIPOLAR    ◇──────────────────┐
                   ◇ CONSTRAINT SATISFIED? ◇             │
                      ◇─────────◇                        │
                           │ Yes                         │
                           ▼      ⌐S106          ⌐S107   ▼
        ┌──────────────────────────┐    ┌─────────────────────────┐
        │ ESTIMATE POSITION OF OBJECT │  │ CONTROL DISPLAY OF ERROR │
        └──────────────┬───────────┘    └─────────────┬───────────┘
                       │                               │
                       │◄──────────────────────────────┘
                       ▼
                ┌──────────────┐
                │     END      │
                └──────────────┘
```

# FIG.12

(S11)
DETECT PICKING-UP OF ARTICLE

(S12)
ACQUIRE IMAGE

(S13)
ESTIMATE SKELETON

(S14)
IDENTIFY JOINT POINT

(S15)
PERFORM TRANSFORMATION FROM CAMERA COORDINATES TO STEREO
SPHERICAL IMAGE COORDINATES

(S16)
DETERMINE WHETHER OR NOT EPIPOLAR CONSTRAINT IS SATISFIED

(S17)
ESTIMATE DISTANCE BETWEEN ARTICLE AND JOINT POINT

(S18)
CALCULATE LIKELIHOOD OF JOINT POINT

(S19)
ASSOCIATE ARTICLE WITH PERSON BASED ON DISTANCE AND LIKELIHOOD

# FIG.13

_40_

┌─ 50
| POSITION ESTIMATION DEVICE |

N

| 30a | 30b | 30c | 60 |
| IMAGING DEVICE | IMAGING DEVICE | IMAGING DEVICE | WEIGHT SENSOR |

# FIG.14

POSITION ESTIMATION DEVICE ⌐50

### CONTROL UNIT ⌐55

IMAGE ACQUISITION UNIT ⌐25a

COORDINATE TRANSFORMATION UNIT ⌐25b

DETERMINATION UNIT ⌐25c

ARTICLE-TAKING-OUT DETECTION UNIT ⌐55a

SKELETON ESTIMATION UNIT ⌐55b

ESTIMATION UNIT ⌐55c

LIKELIHOOD CALCULATION UNIT ⌐55d

ASSOCIATION UNIT ⌐55e

### MEMORY ⌐54

IMAGE DATA ⌐24a

STEREO SPHERICAL IMAGE COORDINATE DATA ⌐24b

DETERMINATION DATA ⌐24c

ESTIMATED-POSITION DATA ⌐24d

ARTICLE POSITION DATA ⌐54a

AVERAGE DISTANCE/ VARIANCE DATA ⌐54b

ESTIMATED-SKELETON DATA ⌐54c

LIKELIHOOD DATA ⌐54d

ASSOCIATION DATA ⌐54e

DISPLAY ⌐21

INPUT UNIT ⌐22

COMMUNICATION I/F UNIT ⌐53

IMAGING DEVICE 30a
IMAGING DEVICE 30b
IMAGING DEVICE 30c
WEIGHT SENSOR 60

32

# FIG.15A

# FIG.15B

|  | AVERAGE DISTANCE $\mu$ (m) | VARIANCE $\sigma$ |
|---|---|---|
| NECK | 0.5749 | 0.144913 |
| ELBOW | 0.3852 | 0.101852 |
| WRIST | 0.1 | 0.093589 |

## FIG.16

# FIG.17

```
                    START

No ◄─┐
     │
     ▼
   ┌──────────────────────┐  S201
   │  HAS                 │
   │  CHANGE IN WEIGHT    │
   │  OCCURRED?           │
   └──────────────────────┘
        │ Yes
        ▼
   ┌──────────────────────┐  S202
   │  JOINT POSITION      │
   │  IDENTIFICATION      │
   │  PROCESS             │
   └──────────────────────┘
        │
        ▼
   ┌──────────────────────┐  S203
   │  LIKELIHOOD          │
   │  CALCULATION         │
   │  PROCESS             │
   └──────────────────────┘
        │
        ▼
   ┌──────────────────────┐  S204          No
   │  TWO OR MORE         │─────────────────────────┐
   │  TARGETS?            │                          ▼
   └──────────────────────┘              ┌──────────────────────┐  S205
        │ Yes                            │  ASSOCIATE ARTICLE   │
        ▼                                │  WITH TARGET         │
   ┌──────────────────────┐  S206        └──────────────────────┘
   │  TARGETS             │   Yes
   │  WITH COMMON JOINT   │──────────┐
   │  POINT?              │          ▼
   └──────────────────────┘   ┌──────────────────────┐  S207
        │ No                  │  ASSOCIATE ARTICLE   │
        ▼                     │  WITH TARGET CLOSEST │
   ┌──────────────────────┐   │  TO ARTICLE          │
   │  IS WRIST            │   └──────────────────────┘
   │  OF ANY TARGET       │  S208      No
   │  INCLUDED?           │──────────────┐
   └──────────────────────┘              │
        │ Yes                            ▼
        ▼                         ┌──────────────────────┐  S209
   ┌──────────────────────┐  S210  │  ASSOCIATE ARTICLE   │
   │  ASSOCIATE ARTICLE   │        │  WITH TARGET WITH    │
   │  WITH TARGET         │        │  LARGEST LIKELIHOOD  │
   │  CLOSEST TO ARTICLE  │        └──────────────────────┘
   └──────────────────────┘
        │
        ▼
       END
```

# FIG.18

```
         ┌─────────────────────────┐
         │   JOINT POSITION        │
         │ IDENTIFICATION PROCESS  │
         └─────────────────────────┘
                      │
                      ▼                    S301
         ┌─────────────────────────┐
         │  ACQUIRE CAPTURED IMAGE  │
         └─────────────────────────┘
                      │
                      ▼                    S302
         ┌─────────────────────────┐
         │    ESTIMATE SKELETON     │
         └─────────────────────────┘
                      │
                      ▼                    S303
         ┌─────────────────────────┐
         │    IDENTIFY JOINT POINT  │
         └─────────────────────────┘
                      │
                      ▼                    S304
         ┌─────────────────────────┐
         │ PERFORM TRANSFORMATION ON│
         │ IMAGE INCLUDING JOINT POINT│
         └─────────────────────────┘
                      │
                      ▼                    S305
         ┌─────────────────────────┐
         │       CALCULATE          │
         │ THREE-DIMENSIONAL VECTOR │
         └─────────────────────────┘
                      │
                      ▼                    S306
         ┌─────────────────────────┐
         │ PERFORM TRANSFORMATION TO│
         │ STEREO SPHERICAL IMAGE   │
         │      COORDINATES         │
         └─────────────────────────┘
                      │
                      ▼                    S307
              ◇ IS EPIPOLAR ◇              No
              ◇ CONSTRAINT SATISFIED? ◇ ──────┐
                      │                        │
                     Yes                       │
                      ▼                    S308│
         ┌─────────────────────────┐          │
         │ ESTIMATE POSITION OF JOINT POINT │  │
         └─────────────────────────┘          │
                      │◄────────────────────────┘
                      ▼
              ┌──────────────┐
              │   RETURN     │
              └──────────────┘
```

# FIG.19

```
┌─────────────────────────┐
│      LIKELIHOOD         │
│  CALCULATION PROCESS    │
└─────────────────────────┘
             │
             ▼                    ┌ S401
┌─────────────────────────────┐
│ CALCULATE DISTANCES BETWEEN │
│   JOINT POINTS AND ARTICLE  │
└─────────────────────────────┘
             │
             ▼                    ┌ S402
┌─────────────────────────────┐
│     IDENTIFY JOINT POINT    │
│      CLOSEST TO ARTICLE     │
└─────────────────────────────┘
             │
             ▼                    ┌ S403
┌─────────────────────────────┐
│    CALCULATE LIKELIHOOD     │
│ (PROBABILITY DENSITY VALUE) │
│   OF IDENTIFIED JOINT POINT │
└─────────────────────────────┘
             │
             ▼                    ┌ S404
┌─────────────────────────────┐
│ EXCLUDE JOINT POINT, WHOSE  │
│ LIKELIHOOD IS SMALLER THAN  │
│  THRESHOLD, FROM TARGETS    │
└─────────────────────────────┘
             │
             ▼
        ┌─────────┐
        │ RETURN  │
        └─────────┘
```

# FIG.20

**EP 4 550 267 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7225434 B
- US 11501462 B2
- US 2022262069 A1

**Non-patent literature cited in the description**

- **SHIGANG LI**. *ICPR'06*, vol. 3, 1046-1049